# EUROPÄISCHE PATENTSCHRIFT

(11) **EP 0 644 112 B1**
(45) Veröffentlichungstag und Bekanntmachung des Hinweises auf die Patenterteilung: **23.10.1996**
(21) Anmeldenummer: 94104996.7
(22) Anmeldetag: 30.03.1994
(51) Int. Cl.: B63G 8/12, F02B 47/10

(54) **Antriebsvorrichtung für ein Wasserfahrzeug, insbesondere Unterwasserfahrzeug**
Propulsion unit for a watercraft, in particular a submarine
Dispositif de propulsion pour engin aquatique, en particulier engin sous-marin

(30) Priorität: 15.09.1993 DE 4331221
(43) Veröffentlichungstag der Anmeldung: 22.03.1995
(73) Patentinhaber: STN ATLAS Elektronik GmbH, 28309 Bremen (DE)
(72) Erfinder: Schütze, Horst, Dipl.-Ing., D-28844 Weyhe (DE)
(74) Vertreter: Eisenführ, Speiser & Partner

(56) Entgegenhaltungen:
- WO-A-90/08693
- DE-A- 3 225 923
- US-A- 3 559 402
- US-A- 3 775 976
- ENGINEERING, Bd.228, Nr.10, November 1988, LONDON Seite 540, XP24658 'German sub has new design of clean closed-cycle engine'

## Beschreibung

Die Erfindung betrifft eine Antriebsvorrichtung für einen außenluftunabhängigen Antrieb eines Wasserfahrzeuges, insbesondere eines Unterwasserfahrzeuges, mit einer Brennkraftmaschine, vorzugsweise einem Dieselmotor, die im geschlossenen Kreislauf arbeitet, wobei das beim Verbrennungsprozeß anfallende Wasser und CO₂ entsorgt, das Abgas mit Sauerstoff angereichert und der Brennkraftmaschine wieder als Arbeitsgas zugeführt wird.

Der konventionelle Antrieb von Unterseebooten erfolgt bei Überwasserfahrt oder bei Schnorchelfahrt dieselelektrisch, während bei Unterwasserfahrt der Antrieb mittels Elektromotoren aus Pufferbatterien erfolgt. Diese Pufferbatterien werden bei Überwasser- oder Schnorchelfahrt wieder aufgeladen. Diese Antriebsart läßt nur einen verhältnismäßig kurzzeitigen Unterwasserantrieb mit geringer Reichweite zu, da die Pufferbatterien nur eine begrenzte Speicherkapazität haben.

Um nun die Reichweite bei Unterwasserfahrt zu erhöhen, sind verschiedene Antriebskonzepte bekannt. Für den Fall, daß ein Nuklearantrieb nicht in Frage kommt, bietet sich der Betrieb mit Brennstoffzellen an unter Verwendung von Sauerstoff und Wasserstoff, die als Vorräte in entsprechenden Speichern mitgeführt werden und als Verbrennungsprodukt Wasser ergeben, das entweder gespeichert oder problemlos nach außenbords entsorgt werden kann.

Darüber hinaus ist bereits vorgeschlagen worden, einen Verbrennungsmotor, insbesondere Dieselmotor, im geschlossenen Kreislauf zu betreiben, wobei das im Abgas anfallende Wasser und CO₂ gespeichert oder entsorgt wird, und anschließend das Abgas mit Sauerstoff angereichert und der Brennkraftmaschine wieder als Arbeitsgas zugeführt wird. Bei einem ersten Verfahren wird das im Abgas enthaltene CO₂ in einer Lauge (z.B. KOH) gebunden und in einem Altlaugentank gespeichert, während in einem zweiten Verfahren (siehe hierzu Schiff & Hafen/Seewirtschaft, Heft 7/1992, Seiten 43-46) das CO₂ in einer Absorptionsanlage in Seewasser gelöst und nach außenbords ins Seewasser entsorgt wird. Eine direkte Entsorgung von CO₂ nach außenbords kommt nicht in Frage, daß dies bei Unterwasserbooten zu auffällig wäre.

Beiden zuvor erwähnten Verfahren haften Nachteile an, daß nämlich diese Antriebe aus Gründen der Speicherkapazität des Altlaugentanks (bei der ersten Variante) bzw. die Absorptionskapazität der Absorptionsanlage (zweite Variante) aus Platz- und Gewichtsgründen nur einen Betrieb mit geringer Leistung zulassen, also nur für sogenannte Unterwasserschleichfahrt (Motorleistung ca. 200-300 kW) geeignet sind. Eine Vollastfahrt unter Wasser (Leistungsbereich 2.000-3.000 kW) scheidet aus, und aus diesem Grunde sind die mit solchen Antrieben mit geschlossenem Kreislauf ausgestatteten Unterseeboote nach wie vor mit großen Pufferbatterien und den notwendigen Elektromotoren (sowie Verbrennungsmotoren und Generatoren zum Wiederaufladen der Pufferbatterien) ausgerüstet, um für Unterwasser-Vollastfahrt die entsprechenden Leistungen bereitzuhalten.

Schließlich ist auch noch ein Antrieb für einen Unterwassertorpedo vorgeschlagen worden, der mit einem Rotationskolbenmotor mit einem geschlossenen Kreislauf von Arbeitsgas und Abgas arbeitet. Bei diesem Antrieb wird das bei der Verbrennung anfallende überschüssige CO₂ durch Kompression und Zwischenkühlung verflüssigt und in einem Druckbehälter abgespeichert. Die Reichweite eines solchen Antriebes ist wegen der begrenzten Speichermöglichkeiten natürlich nicht sehr hoch.

Der vorliegenden Erfindung liegt die Aufgabe zugrunde, eine Antriebsvorrichtung für einen außenluftunabhängigen Antrieb eines Wasserfahrzeuges, insbesondere eines Unterwasserfahrzeuges, mit einer Brennkraftmaschine im geschlossenen Kreislauf vorzuschlagen, bei der auch bei Unterwasserfahrt im geschlossenen Kreislauf höhere Antriebsleistungen erreicht werden können, ohne daß hierzu dieselelektrische Zusatzantriebe mit Generatoren, Elektromotoren und Pufferbatterien erforderlich sind.

Diese Aufgabe wird gemäß der vorliegenden Erfindung dadurch gelöst, daß bei Niedriglastbetrieb der Brennkraftmaschine das Abgas in an sich bekannter Weise über eine Absorptionsanlage geleitet wird, in der das im Abgas enthaltene CO₂ in Seewasser gelöst und dies nach außenbords entsorgt wird; daß bei Vollastbetrieb der Brennkraftmaschine das im Abgas anfallende CO₂ in an sich bekannter Weise in einer Verflüssigungsanlage verflüssigt und in einem Druckspeicher zwischengelagert wird; daß die Leistungsfähigkeit der Absorptionsanlage größer als für den Niedriglastbetrieb aber kleiner als für den Vollastbetrieb ausgelegt ist; und daß bei Niedriglastbetrieb der Brennkraftmaschine das im Druckspeicher zwischengelagerte, verflüssigte CO₂ über die Absorptionsanlage in Seewasser gelöst und dies nach außenbords entsorgt wird.

Bei einer solchen Antriebsvorrichtung lassen sich über verhältnismäßig lange Zeiten hohe Antriebsleistungen erzielen, wobei die dann anfallende hohe CO₂-Menge verflüssigt und in einem Druckspeicher zwischengelagert wird. Sobald die Antriebsvorrichtung danach im Niedriglastbetrieb der Brennkraftmaschine nicht mehr die Kapazität der Absorptionsanlage voll ausnutzt, kann das im Druckspeicher zwischengelagerte, verflüssigte CO₂ abgebaut und nach außenbords entsorgt werden. Es ist also auf diese Weise möglich, bei Vollastbetrieb eine hohe CO₂-Menge anfallen zu lassen, für die die Absorptionsanlage nicht ausgelegt zu werden braucht, weil die überschüssige Menge verflüssigt und im Druckspeicher zwischengelagert wird.

Da die Brennkraftmaschine ohne weiteres auf offenen Außenbetrieb umgeschaltet werden kann, ist selbstverständlich auch eine Überwasserfahrt in üblicher Weise möglich.

Als Absorptionsanlage ist vorzugsweise ein Absorber mit rotierender Siebtrommel vorgesehen, wie er bei gattungsgemäßen Antriebsvorrichtungen üblich ist.

Die Verflüssigungsanlage zwecks Verflüssigung des anfallenden CO₂ im Druckspeicher enthält in konventioneller Weise Kompressoren sowie seewasser-gekühlte Zwischenkühler. In einigen Fällen kann es auch zweckmäßig sein, eine zusätzliche Kühlung durch eine Kältemaschine oder durch Ausnutzung der im flüssigen Sauerstoff enthaltenen Kälte vorzusehen; dieser Fall muß durch eine entsprechende Kosten/Nutzen-Optimierungsrechnung entschieden werden.

Das von der Brennkraftmaschine kommende Abgas wird zweckmäßigerweise, bevor es in die Absorptionsanlage oder in die Verflüssigungsanlage zwecks Speicherung gelangt, über einen Abgaskühler und einen Wasserabscheider geleitet. Als Arbeitsgas für die Brennkraftmaschine dient als Inertgas neben CO₂ zweckmäßigerweise ein Edelgas, z.B. Argon, um die spezifische Wärme des Arbeitsgases der von Umgebungsluft anzugleichen. Dadurch kommt man zu optimalen Betriebsverhältnissen bei Über- und Unterwasserfahrt.

Weitere vorteilhafte Ausgestaltungen der Erfindung sind den Unteransprüchen sowie der nachstehenden Beschreibung eines Ausführungsbeispiels zu entnehmen.

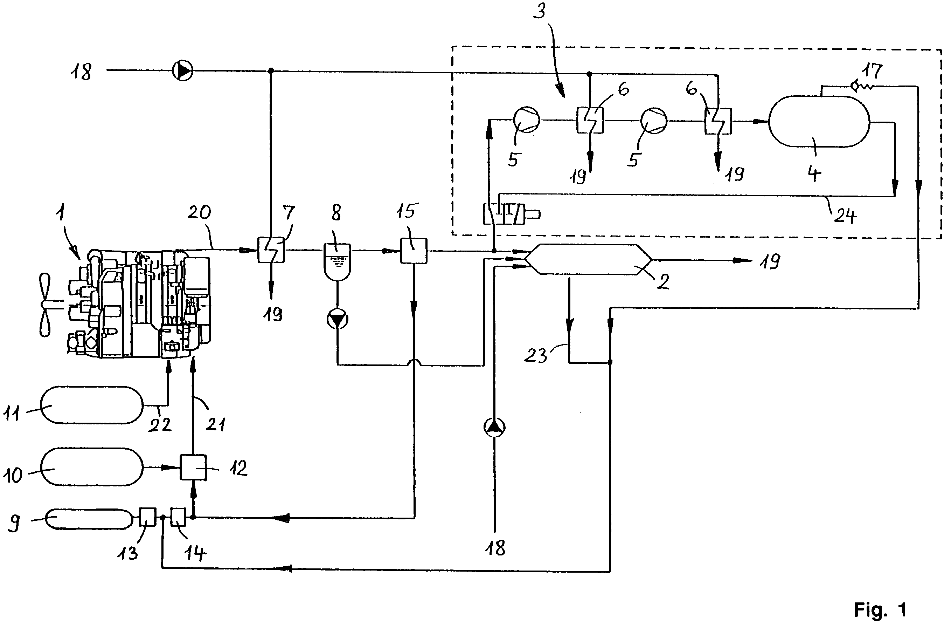

Die Erfindung wird nachfolgend anhand eines Ausführungsbeispiels unter Bezug auf die beigefügte Zeichnung näher erläutert.

Die Zeichnung zeigt ein schematisches Diagramm der Antriebsvorrichtung. Eine Brennkraftmaschine 1, insbesondere ein Dieselmotor, erhält über eine Leitung 21 ein Arbeitsgas und über eine Leitung 22 Brennstoff, im vorliegenden Fall Diesel aus einem Dieseltank 11. Das Arbeitsgas 21 wird über einen Mischer 12 aus rezirkulierendem CO₂ und einem beigemischten Edelgas, z.B. Argon, aus einem Edelgasspeicher 9 sowie aus Sauerstoff aus einem Sauerstoffspeicher 10 in einem geeigneten Verhältnis gemischt. Wird der Sauerstoff in flüssiger Form mitgeführt, so muß er vorher in den gasförmigen Zustand überführt werden. Dies kann z.B. durch einen Wärmetauscher (nicht gezeigt) erfolgen, der die im Abgas der Brennkraftmaschine enthaltene Wärme ausnutzt.

Das Abgas der Brennkraftmaschine 1 gelangt über eine Abgasleitung 20, einen Abgaskühler 7, über einen Wasserabscheider 8 und einen CO₂-Mengenregler 15 sowohl an eine Absorptionsanlage 2 als auch an ein Umschaltventil 16. Der CO₂-Mengenregler 15 sorgt hier für eine geeignete Menge an rezirkulierendem CO₂ im Arbeitsgas, während der Abgaskühler 7 eine Vorkühlung des Abgases durchführt, damit im Wasserabscheider 8 bereits das im Abgas als Wasserdampf enthaltene Wasser kondensiert und abgeschieden werden kann. Der Abgaskühler 7 wird mit Seewasser von einem Seewassereinlaß 18 beschickt, das zum Seewasserauslaß 19 fließt. Das im Wasserabscheider 8 abgeschiedene Wasser wird im vorliegenden Fall ebenfalls zur Absorptionsanlage 2 geführt.

Sofern die an der Brennkraftmaschine 1 eingestellte Leistung niedrig ist, z.B. bei Unterwasserschleichfahrt, kann die über den CO₂-Mengenregler 15 ausgegebene CO₂-Menge von der Absorptionsanlage 2 voll absorbiert werden. Der Absorptionsanlage 2 wird über einen Seewassereinlaß 18 Seewasser zugeführt, das das CO₂ absorbiert, und dies gelangt über einen Seewasserauslaß 19 nach außenbords. Gleichzeitig wird in der Absorptionsanlage 2 das im Abgas enthaltene Argon über eine Leitung 23 herausgeführt und wieder in den Kreislauf eingegeben. Der richtige Argonanteil wird durch entsprechende Betätigung eines Absperrventils 13 zum Edelgasspeicher 9 und einen Druckminderer 14 eingestellt.

Arbeitet die Brennkraftmaschine 1 jedoch mit höherer Leistung oder unter Vollast, so gelangt über das Umschaltventil überschüssiges CO₂ in eine Verflüssigungsanlage 3 mit einem Druckspeicher 4. Die Verflüssigungsanlage 3 besteht im vorliegenden Beispiel aus zwei in Kaskade geschalteten Kompressoren 5 und zwei Zwischenkühlern 6, die ebenso wie der Abgaskühler 7 von einem Seewassereinlaß 18 mit Seewasser beschickt werden. Das in der Verflüssigungsanlage 3 verflüssigte CO₂ wird dann platzsparend im Druckspeicher 4 gespeichert. Der Druckspeicher 4 ist außerdem über ein Druckhalteventil 17 mit dem Kreislauf für das Arbeitsgas verbunden, um ggf. CO₂ beizumischen.

Ist nun die Brennkraftmaschine 1 abgeschaltet oder läuft mit einer so geringen Leistung, daß die Absorptionskapazität der Absorptionsanlage 2 nicht ausgenutzt ist, so kann das Umschaltventil 16 derart umgeschaltet werden, daß eine Ausgangsleitung 24 des Druckspeichers 4 auf den Eingang der Absorptionsanlage 2 geschaltet wird, um CO₂ aus dem Druckspeicher 4 über die Absorptionsanlage 2 im zufließenden Seewasser zu absorbieren und über den Seewasserauslaß 19 nach außenbords zu entsorgen. Durch diese Maßnahme wird der Druckspeicher 4 entlastet und ist zur Aufnahme von weiteren CO₂-Mengen vorbereitet.

Die Verflüssigungsanlage 3 kann auch mit einer zusätzlichen Kältemaschine (nicht gezeigt) zwecks zusätzlicher Kühlung ausgestattet werden. Wird zur Anreicherung des Arbeitsgases flüssiger Sauerstoff mitgeführt, so kann die bei der Verdampfung anfallende Kälte zur zusätzlichen Kühlung in der Verflüssigungsanlage ausgenutzt werden.

## Patentansprüche

1. Antriebsvorrichtung für einen außenluftunabhängigen Antrieb eines Wasserfahrzeuges, insbesondere eines Unterwasserfahrzeuges, mit einer Brennkraftmaschine (1), vorzugsweise einem Dieselmotor, die im geschlossenen Kreislauf arbeitet, wobei das beim Verbrennungsprozeß anfallende Wasser und CO₂ entsorgt, das Abgas mit Sauerstoff (10) angereichert und der Brennkraftmaschine wieder als Arbeitsgas (21) zugeführt wird,
dadurch gekennzeichnet,
daß bei Niedriglastbetrieb der Brennkraftmaschine (1) das Abgas (20) in an sich bekannter Weise über eine Absorptionsanlage (2) geleitet wird, in der das im Abgas enthaltene CO₂ in Seewasser (18) gelöst und dies nach außenbords (19) entsorgt wird;
daß bei Vollastbetrieb der Brennkraftmaschine (1) das im Abgas (20) anfallende CO₂ in an sich bekannter Weise in einer Verflüssigungsanlage (3) verflüssigt und in einem Druckspeicher (4) zwischengelagert wird;
daß die Leistungsfähigkeit der Absorptionsanlage (2) größer als für den Niedriglastbetrieb aber kleiner als für den Vollastbetrieb ausgelegt ist; und
daß bei Niedriglastbetrieb der Brennkraftmaschine (1) das im Druckspeicher (4) zwischengelagerte, verflüssigte CO₂ über die Absorptionsanlage (2) in Seewasser gelöst und dies nach außenbords (19) entsorgt wird.

2. Antriebsvorrichtung nach Anspruch 1,
dadurch gekennzeichnet, daß die Absorptionsanlage (2) ein Absorber mit rotierender Siebtrommel ist.

3. Antriebsvorrichtung nach Anspruch 1 oder 2,
dadurch gekennzeichnet, daß die Verflüssigungsanlage (3) für das CO₂ Kompressoren (5) und seewasser-gekühlte Zwischenkühler (6) enthält.

4. Antriebsvorrichtung nach Anspruch 3,
dadurch gekennzeichnet, daß eine zusätzliche Kühlung in der Verflüssigungsanlage (3) für das CO₂ durch eine Kältemaschine erfolgt.

5. Antriebsvorrichtung nach Anspruch 3, bei der der Sauerstoff für
das Arbeitsgas in flüssiger Form mitgeführt wird, dadurch gekennzeichnet, daß eine zusätzliche Kühlung in der Verflüssigungsanlage (3) für das CO₂ durch Vergasen des flüssigen Sauerstoffs erfolgt.

6. Antriebsvorrichtung nach einem der vorstehenden Ansprüche,
dadurch gekennzeichnet, daß das Abgas (20) der Verbrennungsmaschine (1), bevor es in die Absorptionsanlage (2) oder die Verflüssigungsanlage (3) gelangt, über einen Abgaskühler (7) und einen Wasserabscheider (8) geleitet wird.

7. Antriebsvorrichtung nach einem der vorstehenden Ansprüche,
dadurch gekennzeichnet, daß Verbrennungsluft (21) für die Brennkraftmaschine (1) als Inertgas ein Edelgas (9), z.B. Argon, enthält.

8. Antriebsvorrichtung nach einem der vorstehenden Ansprüche,
dadurch gekennzeichnet, daß bei Überwasser- oder Schnorchelbetrieb die Brennkraftmaschine (1) mit Außenluft betrieben und das Abgas (20) direkt nach außen entsorgt wird.

## Claims

1. A drive device for a drive, independent of the outside air, of a water craft, in particular an underwater craft, having an internal combustion engine (1), preferably a diesel engine, operating in a closed cycle, where the water arising from the combustion process and CO₂ are disposed of and the exhaust gas is enriched with oxygen (10) and supplied to the internal combustion engine again as operating gas (21), characterized in that in low load operation of the internal combustion engine (1) the exhaust gas (20) is directed in a manner known per se by way of an absorption unit (2) in which the CO₂ present in the exhaust gas is dissolved in sea water (18) and disposed of outboard (19); in that in full load operation of the internal combustion engine (1) the CO₂ arising in the exhaust gas (20) is liquified in a liquifying unit (3) in a manner known per se and stored temporarily in an accumulator (4); in that the performance of the absorption unit (2) is designed to be higher than for low load operation but lower than for full load operation; and in that in low load operation of the internal combustion engine (1) the liquified CO₂ stored temporarily in the accumulator (4) is dissolved in sea water by way of the absorption unit (2) and disposed of outboard (19).

2. A drive device according to Claim 1, characterized in that the absorption unit (2) is an absorber having a rotating filter drum.

3. A drive device according to Claim 1 or 2, characterized in that the liquifying unit (3) for the CO₂ contains compressors (5) and intermediate cooling means (6) cooled by sea water.

4. A drive device according to Claim 3, characterized in that an additional cooling takes place in the liquifying unit (3) for the CO₂ by means of a refrigerating machine.

5. A drive device according to Claim 3, in which the oxygen for the operating gas is carried in liquid form, characterized in that an additional cooling takes place in the liquifying unit (3) for the CO₂ by gasifying the liquid oxygen.

6. A drive device according to one of the preceding claims, characterized in that the exhaust gas (20) from the internal combustion engine (1) is directed by way of an exhaust-gas cooling means (7) and a water separator (8) before it reaches the absorption unit (2) or the liquifying unit (3).

7. A drive device according to one of the preceding claims, characterized in that combustion air (21) for the internal combustion engine (1) contains a noble gas (9), for example argon, as inert gas.

8. A drive device according to one of the preceding claims, characterized in that in surface or snorkel operation the internal combustion engine (1) is operated by outside air and the exhaust gas (20) is disposed of directly to the outside.

## Revendications

1. Dispositif d'entraînement destiné à un entraînement indépendant de l'air extérieur d'un bâtiment, notamment d'un sous-marin, comportant un moteur à combustion interne (1), de préférence un moteur diesel, qui fonctionne en circuit fermé, l'eau et le CO₂ produits par le processus de combustion étant évacués, les gaz d'échappement étant enrichis en oxygène (10) et à nouveau envoyés au moteur à combustion interne en tant que gaz comburant (21),
caractérisé en ce que,
en régime à faible charge du moteur à combustion interne (1), les gaz d'échappement (20) sont envoyés de la manière connue dans une installation d'absorption (2), dans laquelle le CO₂ contenu dans les gaz d'échappement est dissous dans de l'eau de mer (18) et évacué hors bord (19) ;
en régime à pleine charge du moteur à combustion interne (1), le CO₂ contenu dans les gaz d'échappement (20) est liquéfié de la manière connue dans une installation de liquéfaction (3) et fait l'objet d'un stockage intermédiaire dans un réservoir sous pression (4) ;
la capacité de l'installation d'absorption (2) est dimensionnée afin d'être supérieure au régime à faible charge mais inférieure au régime à pleine charge ;
et en ce qu'en régime à faible charge du moteur à combustion interne (1), le CO₂ liquéfié stocké à titre intermédiaire dans le réservoir sous pression (4) est dissous dans l'installation d'absorption (2) dans de l'eau de mer et évacué hors bord (19).

2. Dispositif d'entraînement selon la revendication 1,
caractérisé en ce que l'installation d'absorption (2) est un absorbeur comportant un crible à tambour rotatif.

3. Dispositif d'entraînement selon la revendication 1 ou 2,
caractérisé en ce que l'installation de liquéfaction (3) pour le CO₂ comporte des compresseurs (5) et des réfrigérants intermédiaires (6) refroidis à l'eau de mer.

4. Dispositif d'entraînement selon la revendication 3,
caractérisé en ce qu'un refroidissement supplémentaire du CO₂ est effectué dans l'installation de liquéfaction (3) au moyen d'une machine frigorifique.

5. Dispositif d'entraînement selon la revendication 3, avec lequel l'oxygène destiné au gaz comburant est emmené à l'état liquide,
caractérisé en ce qu'un refroidissement supplémentaire du CO₂ est effectué dans l'installation de liquéfaction (3) par la gazéification de l'oxygène liquide.

6. Dispositif d'entraînement selon l'une des revendications précédentes,
caractérisé en ce que, avant d'arriver dans l'installation d'absorption (2) ou dans l'installation de liquéfaction (3), les gaz d'échappement (20) du moteur à combustion interne (1) sont dirigés à travers un réfrigérant (7) de gaz d'échappement et un séparateur d'eau (8).

7. Dispositif d'entraînement selon l'une des revendications précédentes,
caractérisé en ce que l'air de combustion (21) pour le moteur à combustion interne (1) contient un gaz rare (9) en tant que gaz inerte, par exemple de l'argon.

8. Dispositif d'entraînement selon l'une des revendications précédentes,
caractérisé en ce que, lors de la navigation en surface ou au Schnorchel, le moteur à combustion interne (1) fonctionne avec de l'air extérieur, et en ce que les gaz d'échappement (20) sont directement évacués vers l'extérieur.
